# EUROPEAN PATENT APPLICATION

(11) **EP 4 822 572 A1**
(43) Date of publication of application: **14.10.2026**
(21) Application number: 25472007.1
(22) Date of filing: 10.04.2025
(51) Int. Cl.: G06F 21/60, H04L 9/08

(54) **QUANTUM SAFE EMAIL ENCRYPTION SYSTEM AND METHOD**

(71) Applicant: Simple Security EOOD, 1715 Sofia (BG)
(72) Inventor: Kostadinov, Kostadin, 1715 Sofia (BG)
(74) Representative: Benatov, Samuil Gabriel

(57) **Abstract**

Quantum safe email encryption system and method, according to the invention, use quantum computing for device registration, authentication, and encryption key management. This invention leverages Quantum Random Number Generators (QRNGs) and Quantum Computing Algorithms to ensure post-quantum security, preventing unauthorized access to encrypted email communications.

## Description

### Field of the Invention

The present invention relates to secure email encryption and authentication systems and methods.

### Background of the Invention

Existing email encryption systems rely on classical cryptographic techniques such as RSA and ECC, which are susceptible to quantum attacks (e.g., Shor's Algorithm). Traditional email security also fails to restrict decryption to specific devices, leaving encrypted emails vulnerable if account credentials are compromised.

Some known in the state of the art email encryption systems primarily focus on enhancing cryptographic data distribution, secure data accessibility, and advanced encryption management, for example:
US Patent No. 8,589,673 discloses an authenticated cryptographic distribution system, which ensures that cryptographic data is only accessible to authenticated recipients, protecting sensitive data through rigorous recipient verification.

US Patent No. 9,225,709 discloses a trusted cryptographic distribution system which expands upon authentication mechanisms by securely transmitting cryptographic data specifically to trusted entities, reinforcing secure and controlled information dissemination.

US Patent No. 9,710,659 discloses a Kernel-level usage restrictions system, which enforces granular control on encrypted data access through kernel-level drivers, which restrict data usage post-decryption, adding a critical protective layer against unauthorized utilization. US Patent No. 10,114,900 discloses a probabilistically searchable encryption system, which integrates encryption with efficient data retrieval by creating searchable encrypted messages. US Patent No. 11,196,729 discloses an encrypted cryptographic data distribution system, which focuses on securing cryptographic key distribution itself through additional encryption layers, significantly enhancing the safety and reliability of key management processes.

US Patent No. 11,887,061 discloses a machine learning email classification system, which leverages dynamic feature definition for machine learning-based email classification, enhancing automated decision-making for secure message delivery.

US Patent No. 9,419,950 discloses a preference-based secure forwarding system, which ensures secure delivery of emails by automatically identifying and applying recipients' security preferences, including encryption, during forwarding.

US Patent No. 8,027,923 discloses a certified symmetric encryption system, which provides message confidentiality by encrypting emails with a symmetric key, distributing encrypted messages separately from keys, and releasing keys through trusted third parties upon acknowledgment receipt.

US Patent No. 6,760,752 discloses a public key-based secure transmission system, which utilizes public key cryptography, securing emails by signing with the sender's private key, encrypting with the recipient's public key (retrieved from external servers), and delivering messages securely as attachments.

All these inventions rely primarily on classical cryptographic methods (e.g., RSA, ECC) and authentication mechanisms, which are vulnerable to quantum computing threats. Known solutions primarily involve traditional cryptographic distribution or email classification methods, potentially requiring manual or traditional authentication. None of them binds encryption to physical devices, making them potentially vulnerable if credentials are compromised. The methods used in known solutions involve conventional cryptographic safeguards, offering less robust protection against advanced quantum threats. Known technologies even lack quantum network compatibility.

### Summary of the Invention

A task of the invention is to create an email encryption system and method which are resistant to both classical and quantum attacks.

This task is solved by creating a quantum safe email encryption system, comprising a quantum computer with a logical block for generation of values, connected with ability to exchange information to a computer system having a memory with a database, at least one processing unit, and a plurality of interrelated logical blocks, wherein the computer system is connected with ability to exchange information by an encrypted connection to a registered external recipient logical block installed on an external recipient device and to a registered external sending logical block installed on an external sending device, wherein said plurality of logical blocks are: a communication logical block, a storage logical block, a registration checking logical block, a device checking logical block, an information logical block, a logical block for retrieving generated quantum random number, a logical block for symmetric encryption key generation, a logical block for symmetric authenticated encryption, a logical block for unique one-time authentication challenge generation, a verification logical block and a logical block for symmetric decryption key generation, wherein:
- the communication logical block is configured for communication and exchange of information for registration data, email content, notification data, identification data, access requests and responses, message-specific quantum-random input used during encryption, cryptographic materials and associated metadata from and to the quantum computer, external sending logical blocks of external sending devices and recipient external logical block of recipient external devices,
- the storage logical block is configured for storing data of registered external sending logical blocks of external sending devices, registered recipient external logical block of registered recipient external devices, email information and encryption data, wherein the storage logical block is also configured to create user accounts and any received information to created user accounts,
- the registration checking logical block is configured for checking in the storage logical block for registered accounts related to a target recipient of received from the registered external sending logical block email through the communication logical block, and configured for sending through the communication logical block a time-limited registration link to a non-registered external recipient logical block,
- the logical block for retrieving generated quantum random number is configured for retrieving generated by the quantum computer of a device identity quantum token, and configured for association said device identity quantum token to an account for a registered external recipient logical block, and configured for retrieving a generated from the quantum computer of quantum-grade random value, and configured for associating said value to a created email from the registered external sending logical block,
- the device checking logical block is configured for checking if received through the communication logical block unique device fingerprint of a recipient external device is registered or not in the storage logical block,
- the information logical block is configured for processing information for the device identity quantum token and the unique device fingerprint of the recipient external device,
- the logical block for symmetric encryption key generation is configured for generation of a symmetric encryption key based on the information for the device identity quantum token and the quantum-grade random value,
- the logical block for symmetric authenticated encryption is configured for encryption of a created email with a symmetric encryption key,
- the logical block for retrieving generated unique quantum one-time authentication challenge is configured for retrieving a generated from the quantum computer of unique quantum one-time authentication challenge related to a timestamp and message reference, and configured for comparison of received from the registered external recipient logical block and the recipient external device unique one-time authentication code, associated to the fingerprint of the recipient external device, with stored in the storage logical block registered fingerprints,
- the verification logical block is configured for verification of received through the communication logical block recipient external device fingerprints with registered recipient external device fingerprints in the storage logical block,
- the logical block for symmetric decryption key generation is configured for generation a symmetric verification encryption key for an accessed email based on the information for the device identity quantum token and the quantum-grade random value, which symmetric verification encryption key is identical to the generated symmetric encryption key, and configured for decryption of email and allowance of access to it from registered external recipient logical block.

In a preferred embodiment of the invention, the logical block for symmetric authenticated encryption is configured for Kyber encryption for key encapsulation and AES-GCM for content encryption.

In a preferred embodiment of the invention, the logical block for symmetric decryption key generation is configured for Kyber decryption for key encapsulation and AES-GCM for content decryption.

In a preferred embodiment of the invention, the plurality of logical blocks are connected to each other in a shared cloud storage.

According to the invention, also, a quantum safe email encryption method is created, comprising the steps of:
- Installation of external sending logical block on an external sending device and registration of the external sending device with the external sending logical block in a quantum-secure device registration and email encryption system, which is connected to a quantum computer,
- Sending through an encrypted connection an email from registered external sending logical block through the quantum-secure device registration and email encryption system,
- Checking if a recipient email address from the sent email is registered or not in a database of quantum-secure device registration and email encryption system,
- Inviting a non-registered external recipient logical block, which is installed on a recipient external device, to be registered,
- Registration of external recipient logical block and generation of device identity quantum token and association of said token to an account of registered external recipient logical block,
- Checking if a recipient external device is registered or not in a database of quantum-secure device registration and email encryption system by verifying a fingerprint of said recipient external device, and registering of non-registered recipient external device,
- Encryption of the created email by symmetric authenticated encryption,
- Generating a unique quantum one-time authentication challenge and sending it to a registered external recipient logical block installed on a recipient external device, connected to a registered recipient external device,
- Receiving a response of the quantum one-time authentication challenge from the registered external recipient logical block, connected to a registered recipient external device, and allowing or denying access to the email,
- Decryption of the email for granting access from allowed registered external recipient logical block, connected to an allowed registered recipient external device.

In a preferred detailed embodiment of the invention, the method comprises the steps of:
- Installation of external sending logical block on an external sending device and registration of the external sending device with the external sending logical block in a quantum-secure device registration and email encryption system, which is connected to a quantum computer,
- Storing registration information in a database of the quantum-secure device registration and email encryption system,
- Receiving through an encrypted connection an inquiry to send an email from an external sending logical block, containing data for email content and data for external recipient logical block comprising recipient email address, through the quantum-secure device registration and email encryption system,
- Checking if the recipient email address is registered or not in the database, wherein for non-registered external recipient logical block a registration link is sent, then registration information from a non-registered external recipient logical block is received and stored in the database, a recipient account is created with said registration information, then a device identity quantum token is generated and associated to the recipient account,
- Sending a notification for sent email to a registered external recipient logical block,
- Receiving through an encrypted connection an access request containing a unique device fingerprint from a recipient external device connected to the registered external recipient logical block,
- Checking if received unique device fingerprint of a recipient external device is registered or not in the database, wherein for non-registered recipient external device an access approval process is performed,
- Generating a quantum-grade random value, which is stored in the database, and associated to the created email from the registered external sending logical block,
- Generating a symmetric encryption key based on the information for the device identity quantum token and the quantum-grade random value,
- Encryption of the created email from the logical block of registered sending external device by symmetric authenticated encryption,
- Sending through an encrypted connection to a registered external recipient logical block, connected to a registered recipient external device, information for encrypted created email, message-specific quantum-random input used during encryption, associated metadata, and cryptographic materials for reconstruction of the symmetric encryption key,
- Receiving through an encrypted connection identity information for a request for access to email from a registered external recipient logical block, connected to a registered recipient external device,
- Generating a unique quantum one-time authentication challenge related to a timestamp and message reference,
- Sending through an encrypted connection the unique quantum one-time authentication challenge to the registered external recipient logical block,
- Receiving through an encrypted connection from the registered external recipient logical block a combined response for access containing information for the unique quantum one-time authentication challenge and unique device fingerprint of the recipient external device,
- Comparing the received unique device fingerprint of the recipient external device fingerprint with the registered device fingerprints contained in the database,
- Verifying or denying email decryption,
- For verified request for email decryption, a symmetric verification encryption key for the accessed email based on the information for the device identity quantum token and the quantum-grade random value is generated, which symmetric verification encryption key is identical to the generated symmetric encryption key,
- Decrypting the email with symmetric authenticated decryption, and allowing access to the content of the email to registered external recipient logical block through an encrypted connection.

In a preferred embodiment of the invention, the registration link sent to a non-registered external recipient logical block is a time-limit registration link.

In a preferred embodiment of the invention, the access approval process for a non-registered recipient external device is made by the following process: an email access request containing information for the non-registered unique device fingerprint is sent to a registered external sending logical block, which returns an approval or denial of email access response, wherein an approved access response sends a command for registration of unique device fingerprint of a recipient external device.

The quantum-secure device registration and email encryption system, according to the invention provides comprehensive post-quantum security, superior authentication mechanisms, and robust future-proofing, distinctly positioning it ahead of classical encryption solutions. More specifically, the system has the following advantages:
- Quantum-Secure Encryption - the system employs quantum-generated encryption keys using Quantum Random Number Generators (QRNGs) and post-quantum algorithms like Kyber, making it resistant to quantum attacks (e.g., Shor's algorithm);
- Device-Bound Security - the system uses Quantum Device Tokens (QDTs) bound explicitly to device fingerprints, ensuring only authorized devices can decrypt emails;
- Quantum Challenge-Response Authentication (QAC) - the system uniquely implements quantum-based authentication, generating Quantum Authentication Codes (QACs) that prevent replay attacks, device spoofing, and phishing;
- Automated and User-Friendly Authentication - the system provides seamless, fully automated authentication requiring no manual intervention (unlike traditional OTP or password-based systems);
- Forward Secrecy through Dynamic Quantum Keys - the system derives unique session-based quantum keys ensuring forward secrecy, reducing risk if historical keys are compromised;
- Robust Protection Against Phishing and MITM Attacks - the system provides quantum-generated randomness and device-specific QDTs effectively mitigate risks of phishing, replay, or man-in-the-middle attacks;
- Future-Proof Quantum Network Compatibility - the system supports integration with Quantum Key Distribution (QKD) and quantum networks, future-proofing against evolving threats.

### Brief description of the figures

Further in the description, the quantum-secure device registration and email encryption system of the invention is explained by preferred embodiments, given as non-limiting the scope of the invention examples, with reference to the attached figures, where:

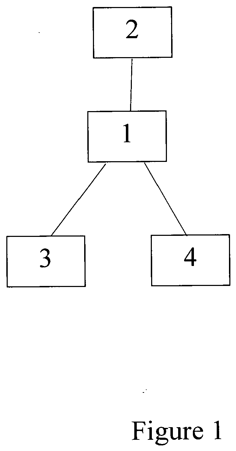

Figure 1 shows a block scheme of the structure of the quantum-secure device registration and email encryption system.

### Exemplary embodiments of the invention

Quantum safe email encryption system and method, according to the invention, use quantum computing for device registration, authentication, and encryption key management. This invention leverages Quantum random number generators (QRNGs) and Quantum computing algorithms to ensure post-quantum security, preventing unauthorized access to encrypted email communications.

The quantum-secure device registration and email encryption system, shown on figure 1, comprises a quantum computer 4 with a logical block for generation of values, connected with ability to exchange information to a computer system 1 having a memory with a database, at least one processing unit, and a plurality of interrelated logical blocks, wherein the computer system 1 is connected with ability to exchange information by an encrypted connection to a registered external recipient logical block connected to an external recipient device and to a registered external sending logical block connected to an external sending device. The encrypted connection can be made with different encryption protocols, for example it can use Kyber encryption and AES-GCM encryption.

The entire process is based on sending from the computer system 1 inquiries for generation of specific quantum values to the quantum computer, that are received and used in the computer system.

The storage logical block stores data of registered external sending logical blocks 2 of external sending devices, registered recipient external logical block 3, registered recipient external devices, email information and encryption data, wherein the storage logical block is also configured to create user accounts and any received information to created user accounts, receives registration information from external sending logical block 2.

Any communication between the computer system 1 and registered external sending logical blocks 2, according to the invention, means that the computer system communicates with an external sending device through the registered external sending logical blocks 2 which is installed on it.

Any communication between the computer system 1 and registered recipient external logical block 3, according to the invention, means that the computer system communicates with an recipient external device through the registered recipient external logical block 3 which is installed on it.

After registration of the external sending logical blocks 2 and the registered recipient external logical block 3, any communication related to any of these logical blocks, is connected also through their created accounts in the system.

The plurality of logical blocks can be connected to each other in a shared cloud storage, or in a individual computer system.

Said plurality of logical blocks are: a communication logical block, a storage logical block, a registration checking logical block, a device checking logical block, an information logical block, a logical block for retrieving generated quantum random number, a logical block for symmetric encryption key generation, a logical block for symmetric authenticated encryption, a logical block for unique one-time authentication challenge generation, a verification logical block and a logical block for symmetric decryption key generation.

The communication logical block communicates and exchanges information for registration data, email content, notification data, identification data, access requests and responses, message-specific quantum-random input used during encryption, cryptographic materials and associated metadata from and to the quantum computer 4, external sending logical blocks 2 of external sending devices and recipient external logical block 3 of recipient external devices.

The registration checking logical block checks in the storage logical block for registered accounts related to a target recipient of received from the registered external sending logical block 2 email through the communication logical block, and sends through the communication logical block a time-limited registration link (for example with duration 15 minutes) to a non-registered external recipient logical block 3. Clicking the link on a new device triggers device fingerprinting.

The logical block for retrieving generated quantum random number retrieves a generated from the quantum computer 4 of device identity quantum token, and associates said device identity quantum token to an account for a registered external recipient logical block 3, and retrieves a generated from the quantum computer 4 of quantum-grade random value, and configured for associating said value to a created email from the registered external sending logical block 2.

The device checking logical block checks if received through the communication logical block unique device fingerprint of a recipient external device is registered or not in the storage logical block. The unique device fingerprint uniquely identifies the device, and can comprise information such as CPU ID, MAC Address, TPM (trusted platform module) Data, OS Signature.

The logical block for symmetric encryption key generation generates a symmetric encryption key based on the information for the device identity quantum token and the quantum-grade random value.

The logical block for symmetric authenticated encryption encrypts a created email with a symmetric encryption key, which can be for example Kyber encryption for key encapsulation for key exchange and AES-GCM for content encryption for confidentiality, or other suitable encryption, known from the state of the art.

The logical block for retrieving generated unique quantum one-time authentication challenge retrieves a generated from the quantum computer 4 of unique quantum one-time authentication challenge related to a timestamp and message reference, and compares received from the registered external recipient logical block 3 and the recipient external device unique one-time authentication code, associated to the fingerprint of the recipient external device, with stored in the storage logical block registered fingerprints.

Quantum challenge-response authentication (QACs) is a post-quantum authentication mechanism designed to verify the legitimacy of a registered device before granting access to encrypted emails. It ensures that only devices registered via a quantum device token (QDT) can respond to authentication challenges correctly. Thus, it is much more efficient way of authentication compared to traditional authentication methods which rely on passwords, OTPs, or symmetric key challenges, which are susceptible to phishing, key theft, or replay attacks, can be brute-forced or broken using quantum algorithms, and often require manual user intervention. Quantum randomness ensures each challenge is truly unpredictable. There are no static secrets. Unlike passwords or pre-shared keys, QACs are dynamically computed from Quantum device tokens (QDTs). Device-specific authentication prevents attackers from using stolen credentials on a different device. Even if an attacker observes a valid response, they cannot reproduce it without access to a quantum computer 4, because the responses are unclonable.

The process is based on a quantum circuit for generating measured output from a quantum circuit (QC_Output). A quantum computer 4 generates QC_Output, which is then used in QAC computation, having the following steps:
1. Initialize a quantum register with N qubits.
2. Apply a Hadamard gate to create superposition.
3. Measure the qubits, collapsing them into a random classical bitstring.
4. Use this bitstring in the QAC computation.

Each authentication attempt generates a completely different QAC, even for the same device.

Attackers cannot precompute valid QACs because of true quantum randomness.

The verification logical block verifies received through the communication logical block recipient external device fingerprints with registered recipient external device fingerprints in the storage logical block.

The logical block for symmetric decryption key generation generates a symmetric verification encryption key for an accessed email based on the information for the device identity quantum token and the quantum-grade random value, which symmetric verification encryption key is identical to the generated symmetric encryption key.

The logical block for symmetric decryption key generation decrypts email and allowance of access to it from registered external recipient logical block 3

By binding email encryption to quantum-generated device tokens, the invention ensures that only registered devices can decrypt emails, enhancing security in quantum and classical environments.

Every time a registered external recipient logical block 3 connected to a registered recipient external device tries to open the email, it must pass through the verification process in order the email to be decrypted and open to be seen. Quantum-generated keys ensure forward secrecy. All future encryption keys are derived from QDT, ensuring post-quantum security. This prevents unauthorized decryption.

This system is resistant to quantum computing attacks and prevents unauthorized access, hijacking or credential reuse and quantum brute-force attacks that would break traditional authentication, and protects against device spoofing, phishing, and man-in-the-middle (MITM) attacks by leveraging quantum random numbers (QRNG) and Quantum computing algorithms to generate non-reproducible authentication codes. Even if credentials are stolen, emails remain secure.

The system is resistant to both classical and quantum attacks as shown below:

| Threat | Risk Level | QAC Countermeasure |
|---|---|---|
| Brute force attack | Very Low | QACs are quantum-random and cannot be guessed. |
| Man-in-the-Middle (MITM) | Very Low | Quantum challenge-response prevents replay attacks. |
| Replay attack | None | Each challenge is unique and time-bound. |
| Device cloning | None | QDTs are device-specific, attackers cannot forge them. |
| Quantum attack (Grover's algorithm) | None | QAC uses post-quantum secure hashing. |

The system is fully automated and transparent and no user interaction is required (unlike OTP-based authentication).

The system can be incorporated, for example, in corporate & government communications, financial transactions, personal email encryption.

The system, according to the invention, can also use additional means for protection of communication, such as:
- Integration with Quantum key distribution (qkd)
   Blockchain-based verification logs for immutable audit trails
   AI-driven anomaly detection for suspicious authentication attempts

### Exemplary method for quantum-secure device registration and email encryption

### Process 1: First device registration

### (Establishing a trusted identity between a first recipient device and a recipient email account)

### Purpose

This process initiates the secure relationship between a recipient's email address and the first recipient physical device that will be authorized to decrypt future encrypted emails.

It creates a trusted, cryptographically bound identity by:
- Fingerprinting the device
- Issuing a quantum-generated identity token
- Storing both elements securely on the database

The result is a binding between the user's email and recipient device's digital identity, without storing any long-term secrets on the device itself.

### Operational Flow

### Step 1: Trigger - first-time secure communication

The process begins when someone attempts to send a secure email to a recipient who has not yet registered any recipient external logical block 3 and any recipient devices with the system.

To continue, the recipient must first enroll a trusted recipient external logical block 3 and a trusted device through a communication logical block.

### Step 2: Onboarding email/device

The system sends a time-limited onboarding link to the recipient's email address.

When the recipient clicks the link on the intended device, the registration external logical block related to the recipient email/device process begins.

The recipient registers recipient external logical block in the system and associates it to an email and recipient device.

### Step 3: Device fingerprinting

The recipient's device generates a unique, deterministic fingerprint based on its setup.

The result is a fingerprint that is:
- Unique to the specific recipient device
- Consistent across sessions
- Non-reversible, to protect privacy

This fingerprint is not stored on the device. It is re-generated when needed.

### Step 4: Issuing the device identity quantum token (QDIT)

Generating a quantum-grade identity token for the recipient external logical block 3.
- This token is generated using a quantum random number generator (QRNG) with a remote quantum computer 4.
- The token serves as the recipient external logical block's cryptographic root identity and is securely stored on the database.

### Step 5: Create and store registration record

The system creates a registration record for the recipient, including:
- The recipient's email address
- The fingerprint of the device
- The quantum identity token
- A timestamp of registration
- Optional metadata (such as device nickname or platform)

This record becomes the authoritative identity reference for future decryption and authentication.

### Security benefits of process 1

| Feature | Description |
|---|---|
| One-time identity anchor | Creates the initial, trusted binding between user and hardware |
| Device-specific | Uses detailed, tamper-resistant fingerprinting |
| Post-quantum secure | Relies on quantum-grade entropy |
| No secrets on device | Device stores nothing permanent - all identity is verified live |
| Replay and clone resistance | Only the exact same device can reproduce the fingerprint successfully |

Summary of Process 1: establishes a trusted, post-quantum-secure registration for a recipient external logical block 3 and a recipient's device, enabling it to decrypt encrypted messages in the future. The identity is bound to a specific device without requiring passwords, certificates, or keypairs - and is enforced by comparing live fingerprints against the server-stored identity record.

This process forms the foundation of trust in the system architecture and is required only once per recipient external logical block 3.

### Process 2: Email encryption

### (Generation of a unique, quantum-secure encryption key per message)

### Purpose

This process defines how an email is encrypted such that only the intended recipient's pre-registered external logical block and device can decrypt it. The encryption process uses a combination of:
- A server-held device identity quantum token
- A unique device fingerprint
- A fresh quantum-random value generated for each message

Together, these ensure that every email is encrypted with a unique, unforgeable key that only the recipient's device can reconstruct

### Operational Flow

### Step 1: Retrieve recipient identity parameters

When an email is to be encrypted, the system retrieves from the database:
- The quantum-generated identity token that was issued to the recipient external logical block 3 during device registration,
- The recipient's device fingerprint, or the method used to verify that fingerprint at decryption time.

These elements serve as the recipient's identity anchors and are stored securely by the server.

### Step 2: Generate message-specific entropy

A fresh quantum-grade random value is generated specifically for this email message.

This random value:
- Is generated using a quantum random number generator,
- Acts as an ephemeral "salt" or input that ensures the encryption key is different for every message,
- Provides forward secrecy, meaning compromise of one message does not affect the security of others,

### Step 3: Derive the encryption key

Using:
1. The recipient's registered identity token (A pre-provisioned quantum-random secret (QDIT), which is stored only by the system)
   - The known device fingerprint (or equivalent representation)
   - The freshly generated per-message quantum-random value (QGRN)

A secure, deterministic process is used to derive a symmetric encryption key. This key is never stored - it is generated only for the purpose of encrypting this message.

Because the same inputs will later be available to the correct recipient device, the key can be independently reconstructed during decryption, without being transmitted or exchanged.

### Step 4: Encrypt the email content

The email body is encrypted using a symmetric, authenticated encryption algorithm such as AES-GCM.

This encryption provides both:
- Confidentiality: Only someone with the correct key can decrypt the message
- Integrity: Any unauthorized modification of the message will be detected and cause decryption to fail

The encryption produces:
- The encrypted message (ciphertext)
- An authentication tag
- An initialization vector (randomized for each encryption)

### Step 5: Package and send

The encrypted email is sent to the recipient, including:
- The encrypted message
- The message-specific quantum-random input used during encryption
- The associated metadata (e.g., sender, timestamp, message ID)
- The necessary cryptographic materials for the recipient device to reconstruct the key

The quantum identity token is never transmitted, and only the system retains knowledge of it.

### Security properties of process 2

| Feature | Benefit |
|---|---|
| Device binding | Only the registered device can reconstruct the encryption key |
| Post-quantum entropy | Keys incorporate quantum randomness for security against quantum attacks |
| Forward secrecy | Every email uses a unique encryption key |
| Tamper detection | Encryption includes integrity checking to prevent silent corruption |
| No key exchange required | Sender and recipient derive the same key without traditional cryptographic keypairs |

Summary of Process 2 - it ensures that:
- Each email is encrypted with a key that is derived but never stored
- The encryption key is tied to the recipient's registered device identity
- The process is stateless, scalable, and secure even against quantum-capable adversaries

Only a registered recipient external logical block and a recipient device that was formally registered and fingerprint-verified can reconstruct the encryption key and access the message in Process 3.

### Process 3: Quantum challenge authentication and email decryption

### Purpose

This process ensures that a device requesting to decrypt an encrypted email is:
- Authenticated in real time using a quantum-generated challenge
- Matched to its original registration fingerprint
- Able to derive the correct decryption key only if it is the authorized setup device

It protects against cloning, spoofing, replay attacks, and unauthorized decryption attempts.

### Operational flow

### Step 1: Challenge generation

When a recipient device attempts to decrypt an email, the system checks if this device is registered with the system. After that it generates a one-time authentication challenge. This challenge is created using true quantum-random bits obtained from a quantum computer 4.

The challenge is uniquely tied to the specific email being accessed and includes a timestamp and message reference to ensure it cannot be reused or predicted.

### Step 2: Challenge delivery

The generated challenge is sent to the recipient's device, which is attempting to perform decryption. This device must now prove that it is the same setup that was registered during the initial setup phase in Process 1.

### Step 3: Device response (Authentication)

Upon receiving the challenge, the recipient device uses its own setup - known as its Device fingerprint (DFP) - to compute a response to the challenge.

This fingerprint is derived in a consistent way each time and reflects immutable or hard-to-spoof setup traits. The fingerprint is combined with the challenge to produce a response code, which is then returned to the system.

This response effectively proves that the device is not only registered but also physically present and actively participating in the authentication process.

### Step 4: Challenge verification

The system receives the response and verifies it against the originally registered fingerprint. If the response is valid, this proves that the decryption request is coming from the correct and trusted device.

If the response fails, decryption is denied, and access may be blocked or flagged as suspicious.

### Step 5: Decryption key reconstruction

If the device is successfully authenticated, it is permitted to reconstruct the encryption key (created a decryption key) for the message.

This key is deterministically derived using three components:
2. The setup fingerprint of the device
3. A pre-provisioned quantum-random secret (QDIT), which is stored only by the system
4. A unique, per-message quantum-random value (QGRN) that was included in the email metadata

These inputs are combined in a cryptographic derivation process to produce the exact symmetric key that was originally used to encrypt the message. Because this key derivation is bound to the device and message, no other party can replicate it.

### Step 6: Message decryption

Finally, using the derived symmetric key, the device decrypts the email content using a secure authenticated encryption algorithm.

This step not only restores the original plaintext but also verifies that the message has not been tampered with in transit. If any part of the message was altered, the decryption will fail, ensuring both confidentiality and integrity.

Summary of security guarantees
- Device-level authentication: Only the originally registered device can respond correctly to the challenge
- Quantum-grade freshness: Each challenge is truly quantum random and unique, defeating replay attacks
- Forward secrecy: Each message is encrypted under a different key, generated per session
- Clone resistance: Even a perfect copy of the encrypted email and metadata cannot be decrypted on a different device
- Zero storage on client: The client does not store any permanent secret - identity is verified live, on demand

It will be clear to those skilled in the art that various modifications of the quantum-secure device registration and email encryption system are possible, which are also within the scope of the invention as defined in the appended claims. All parts of the system can be replaced with technically equivalent elements.

The reference numbers of the technical features are included in the claims solely for the purpose of increasing the comprehensibility of the claims and, therefore, these reference numbers do not have any limiting effect on the interpretation of the elements indicated by these reference numbers.

## Claims

**2.** Quantum safe email encryption system, comprising a quantum computer (4) with a logical block for generation of values, connected with ability to exchange information to a computer system (1) having a memory with a database, at least one processing unit, and a plurality of interrelated logical blocks, wherein the computer system (1) is connected with ability to exchange information by an encrypted connection to a registered external recipient logical block installed on an external recipient device and to a registered external sending logical block installed on an external sending device, wherein said plurality of logical blocks are: a communication logical block, a storage logical block, a registration checking logical block, a device checking logical block, an information logical block, a logical block for retrieving generated quantum random number, a logical block for symmetric encryption key generation, a logical block for symmetric authenticated encryption, a logical block for unique one-time authentication challenge generation, a verification logical block and a logical block for symmetric decryption key generation, wherein:
- the communication logical block is configured for communication and exchange of information for registration data, email content, notification data, identification data, access requests and responses, message-specific quantum-random input used during encryption, cryptographic materials and associated metadata from and to the quantum computer (4), external sending logical blocks (2) of external sending devices and recipient external logical block (3) of recipient external devices,
- the storage logical block is configured for storing data of registered external sending logical blocks (2) of external sending devices, registered recipient external logical block (3) of registered recipient external devices, email information and encryption data, wherein the storage logical block is also configured to create user accounts and any received information to created user accounts,
- the registration checking logical block is configured for checking in the storage logical block for registered accounts related to a target recipient of received from the registered external sending logical block (2) email through the communication logical block, and configured for sending through the communication logical block a time-limited registration link to a non-registered external recipient logical block (3),
- the logical block for retrieving generated quantum random number is configured for retrieving generated by the quantum computer (4) of a device identity quantum token, and configured for association said device identity quantum token to an account for a registered external recipient logical block (3), and configured for retrieving a generated from the quantum computer (4) of quantum-grade random value, and configured for associating said value to a created email from the registered external sending logical block (2),
- the device checking logical block is configured for checking if received through the communication logical block unique device fingerprint of a recipient external device is registered or not in the storage logical block,
- the information logical block is configured for processing information for the device identity quantum token and the unique device fingerprint of the recipient external device,
- the logical block for symmetric encryption key generation is configured for generation of a symmetric encryption key based on the information for the device identity quantum token and the quantum-grade random value,
- the logical block for symmetric authenticated encryption is configured for encryption of a created email with a symmetric encryption key,
- the logical block for retrieving generated unique quantum one-time authentication challenge is configured for retrieving a generated from the quantum computer (4) of unique quantum one-time authentication challenge related to a timestamp and message reference, and configured for comparison of received from the registered external recipient logical block (3) and the recipient external device unique one-time authentication code, associated to the fingerprint of the recipient external device, with stored in the storage logical block registered fingerprints,
- the verification logical block is configured for verification of received through the communication logical block recipient external device fingerprints with registered recipient external device fingerprints in the storage logical block,
- the logical block for symmetric decryption key generation is configured for generation a symmetric verification encryption key for an accessed email based on the information for the device identity quantum token and the quantum-grade random value, which symmetric verification encryption key is identical to the generated symmetric encryption key, and configured for decryption of email and allowance of access to it from registered external recipient logical block (3).

**2.** Quantum safe email encryption system according to claim 1, **characterized in that** the logical block for symmetric authenticated encryption is configured for Kyber encryption for key encapsulation and AES-GCM for content encryption.

**3.** Quantum safe email encryption system according to claim 2, **characterized in that** the logical block for symmetric decryption key generation is configured for Kyber decryption for key encapsulation and AES-GCM for content decryption.

**4.** Quantum safe email encryption system according to any of the preceding claims, **characterized in that** the plurality of logical blocks are connected to each other in a shared cloud storage.

**5.** Quantum safe email encryption method, comprising the steps of:
- Installation of external sending logical block (2) on an external sending device and registration of the external sending device with the external sending logical block (2) in a quantum-secure device registration and email encryption system, which is connected to a quantum computer,
- Sending through an encrypted connection an email from registered external sending logical block (2) through the quantum-secure device registration and email encryption system,
- Checking if a recipient email address from the sent email is registered or not in a database of quantum-secure device registration and email encryption system,
- Inviting a non-registered external recipient logical block (3), which is installed on a recipient external device, to be registered,
- Registration of external recipient logical block (3) and generation of device identity quantum token and association of said token to an account of registered external recipient logical block (3),
- Checking if a recipient external device is registered or not in a database of quantum-secure device registration and email encryption system by verifying a fingerprint of said recipient external device, and registering of non-registered recipient external device,
- Encryption of the created email by symmetric authenticated encryption,
- Generating a unique quantum one-time authentication challenge and sending it to a registered external recipient logical block (3) installed on a recipient external device, connected to a registered recipient external device,
- Receiving a response of the quantum one-time authentication challenge from the registered external recipient logical block (3), connected to a registered recipient external device, and allowing or denying access to the email,
- Decryption of the email for granting access from allowed registered external recipient logical block (3), connected to an allowed registered recipient external device.

**6.** Quantum safe email encryption method, according to claim 5, comprising the steps of:
- Installation of external sending logical block (2) on an external sending device and registration of the external sending device with the external sending logical block (2) in a quantum-secure device registration and email encryption system, which is connected to a quantum computer,
- Storing registration information in a database of the quantum-secure device registration and email encryption system,
- Receiving through an encrypted connection an inquiry to send an email from an external sending logical block (2), containing data for email content and data for external recipient logical block (3) comprising recipient email address, through the quantum-secure device registration and email encryption system,
- Checking if the recipient email address is registered or not in the database, wherein for non-registered external recipient logical block (3) a registration link is sent, then registration information from a non-registered external recipient logical block (3) is received and stored in the database, a recipient account is created with said registration information, then a device identity quantum token is generated and associated to the recipient account,
- Sending a notification for sent email to a registered external recipient logical block (3),
- Receiving through an encrypted connection an access request containing a unique device fingerprint from a recipient external device connected to the registered external recipient logical block (3),
- Checking if received unique device fingerprint of a recipient external device is registered or not in the database, wherein for non-registered recipient external device an access approval process is performed,
- Generating a quantum-grade random value, which is stored in the database, and associated to the created email from the registered external sending logical block (2),
- Generating a symmetric encryption key based on the information for the device identity quantum token and the quantum-grade random value,
- Encryption of the created email from the logical block of registered sending external device (2) by symmetric authenticated encryption,
- Sending through an encrypted connection to a registered external recipient logical block (3), connected to a registered recipient external device, information for encrypted created email, message-specific quantum-random input used during encryption, associated metadata, and cryptographic materials for reconstruction of the symmetric encryption key,
- Receiving through an encrypted connection identity information for a request for access to email from a registered external recipient logical block (3), connected to a registered recipient external device,
- Generating a unique quantum one-time authentication challenge related to a timestamp and message reference,
- Sending through an encrypted connection the unique quantum one-time authentication challenge to the registered external recipient logical block (3),
- Receiving through an encrypted connection from the registered external recipient logical block (3) a combined response for access containing information for the unique quantum one-time authentication challenge and unique device fingerprint of the recipient external device,
- Comparing the received unique device fingerprint of the recipient external device fingerprint with the registered device fingerprints contained in the database,
- Verifying or denying email decryption,
- For verified request for email decryption, a symmetric verification encryption key for the accessed email based on the information for the device identity quantum token and the quantum-grade random value is generated, which symmetric verification encryption key is identical to the generated symmetric encryption key,
- Decrypting the email with symmetric authenticated decryption, and allowing access to the content of the email to registered external recipient logical block (3) through an encrypted connection.

**7.** Quantum safe email encryption method, according to claims 5 and 6, wherein the registration link sent to a non-registered external recipient logical block (3) is a time-limit registration link.

**8.** Quantum safe email encryption method, according to claims 5 - 7, wherein the access approval process for a non-registered recipient external device is made by the following process: an email access request containing information for the non-registered unique device fingerprint is sent to a registered external sending logical block (2), which returns an approval or denial of email access response, wherein an approved access response sends a command for registration of unique device fingerprint of a recipient external device.
